(19) Europäisches Patentamt / European Patent Office / Office européen des brevets

(11) **EP 4 370 990 B1**

(12) **EUROPÄISCHE PATENTSCHRIFT**

(45) Veröffentlichungstag und Bekanntmachung des Hinweises auf die Patenterteilung:
**10.09.2025   Patentblatt 2025/37**

(21) Anmeldenummer: **22747270.1**

(22) Anmeldetag: **01.07.2022**

(51) Internationale Patentklassifikation (IPC):
**G05D 1/00** *(2024.01)*

(52) Gemeinsame Patentklassifikation (CPC):
**G05D 1/0274; G01C 21/206; G05D 1/024**

(86) Internationale Anmeldenummer:
**PCT/EP2022/068245**

(87) Internationale Veröffentlichungsnummer:
**WO 2023/285167 (19.01.2023 Gazette 2023/03)**

(54) **VERFAHREN ZUM AUSDÜNNEN EINES SLAM-GRAPHEN, VERFAHREN ZUM BETRIEB EINES MOBILEN GERÄTS UND MOBILES GERÄT**

METHOD FOR THINNING OUT A SLAM GRAPH, METHOD FOR OPERATING A MOBILE DEVICE, AND MOBILE DEVICE

PROCÉDÉ D'ÉCLAIRCISSEMENT D'UN GRAPHE SLAM, PROCÉDÉ DE FONCTIONNEMENT D'UN DISPOSITIF MOBILE, ET DISPOSITIF MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2021   DE 102021207418**

(43) Veröffentlichungstag der Anmeldung:
**22.05.2024   Patentblatt 2024/21**

(73) Patentinhaber: **Robert Bosch GmbH
70442 Stuttgart (DE)**

(72) Erfinder:
- **HOLOCH, Matthias**
  **71229 Leonberg (DE)**
- **KURZ, Gerhard**
  **76131 Karlsruhe (DE)**

(56) Entgegenhaltungen:
- **EADE E ET AL: "Monocular graph SLAM with complexity reduction", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 3017 - 3024, XP031920068, ISBN: 978-1-4244-6674-0, DOI: 10.1109/ IROS.2010.5649205**
- **LANG DAGMAR ET AL: "Semantic 3D Octree Maps based on Conditional Random Fields", 23 May 2013 (2013-05-23), XP055792144, Retrieved from the Internet <URL:http://www.mva-org.jp/ Proceedings/2013USB/papers/08-03.pdf> [retrieved on 20210401]**

**Beschreibung**

Die vorliegende Erfindung betrifft ein Verfahren zum Ausdünnen eines SLAM-Graphen, der zum Betreiben eines mobilen Geräts wie z.B. eines Haushaltsroboters, verwendet wird, ein Verfahren zum Betreiben eines mobilen Geräts, eine Recheneinheit und ein Computerprogramm zu dessen Durchführung sowie ein mobiles Gerät.

Hintergrund der Erfindung

Mobile Geräte wie z.B. Saug- oder Wischroboter oder andere Haushaltsroboter bewegen sich typischerweise in einer zu bearbeitenden Umgebung wie z.B. einer Wohnung. Eines der grundlegenden Probleme eines solchen oder auch anderen mobilen Geräts besteht darin, sich zu orientieren, also zu wissen, wie die Umgebung aussieht und wo es sich (absolut) befindet. Dafür ist das mobile Gerät z.B. mit verschiedenen Sensoren ausgerüstet, wie z.B. Ultraschall-Sensoren, Kameras oder Lidar-Sensoren, mit deren Hilfe die Umgebung z.B. zwei- oder dreidimensional erfasst wird. Dies ermöglicht es dem mobilen Gerät, sich lokal zu bewegen, Hindernisse rechtzeitig zu erkennen und zu umfahren.

Wenn darüber hinaus die absolute Position des mobilen Geräts bekannt ist, z.B. aus zusätzlichen GPS-Sensoren, kann eine Karte aufgebaut werden. Dabei misst das mobile Gerät die relative Position möglicher Hindernisse zu ihm und kann mit seiner bekannten Position dann die absolute Position der Hindernisse bestimmen, die anschließend in die Karte eingetragen werden. Dies funktioniert allerdings nur bei extern zur Verfügung gestellten Positionsinformation.

Als SLAM ("Simultaneous Localization and Mapping", in etwa: Simultane Positionsbestimmung und Kartierung) wird ein Verfahren in der Robotik bezeichnet, bei dem ein mobiles Gerät wie ein Roboter gleichzeitig eine Karte seiner Umgebung erstellen und seine räumliche Lage innerhalb dieser Karte schätzen kann oder muss. Es dient damit dem Erkennen von Hindernissen und unterstützt somit die autonome Navigation.

Aus "EADE E ET AL, "Monocular graph SLAM with complexity reduction", INTELLIGENT ROBOTS AND SYSTEMS (IROS), 2010 IEEE/RSJ INTERNATIONAL CONFERENCE ON, IEEE, PISCATAWAY, NJ, USA, (20101018), doi:10.1109/IROS.2010.5649205, ISBN 978-1-4244-6674-0, pages 3017 - 3024, XP031920068" und "Lang Dagmar ET AL, "Semantic 3D Octree Maps based on Conditional Random Fields", (20130523), URL: http://www.mva-org.jp/Proceedings/2013USB/papers/08-03.pdf, (20210401), XP055792144 " sind auf SLAM-Graphen beruhende Konzepte bekannt.

Offenbarung der Erfindung

Erfindungsgemäß werden ein Verfahren zum Ausdünnen eines SLAM-Graphen, ein Verfahren zum Betreiben eines mobilen Geräts, eine Recheneinheit und ein Computerprogramm zu dessen Durchführung sowie ein mobiles Gerät mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit dem Thema SLAM sowie dessen Anwendung bei mobilen Geräten. Ein typisches Beispiel für ein mobiles Gerät ist ein Haushaltsroboter wie z.B. ein Saug- und/oder Wischroboter. Ebenso wird SLAM aber auch bei anderen Arten von Robotern, auch bei Drohnen sowie Fahrzeugen, wenn diese z.B. zumindest teilweise automatisiert fahren, verwendet. Bei SLAM wiederum gibt es verschiedene Ansätze, Karten und Positionen darzustellen. Ein Ansatz, der auch im Rahmen der vorliegenden Erfindung verwendet wird, ist sog. graphbasiertes SLAM ("graph-based SLAM"). Hier wird die Karte anhand eines

Graphen, nachfolgend auch als SLAM-Graph bezeichnet, dargestellt, der eine Vielzahl an Knoten und eine Vielzahl an Kanten aufweist, wobei eine Kante in der Regel jeweils zwei Knoten verbindet. Die Endpunkte der Kante liegen damit auf den Knoten. Grundsätzlich kann es aber auch Kanten geben, die nur mit einem oder auch mit mehr als zwei Knoten verbunden sind. Sobald ein solcher Graph erstellt ist, kann die Karte berechnet werden, indem die räumliche Konfiguration der Knoten gefunden wird, die größtenteils mit den durch die Kanten modellierten Messungen übereinstimmt.

Die Knoten entsprechen dabei jeweils Posen (Position und Orientierung) des mobilen Geräts, die Kanten entsprechen Verbindungen dazwischen. Dabei gibt es verschiedene Arten von Kanten. Eine Kante kann aus Beobachtungen der Umgebung gewonnen werden, z.B. durch Bestimmung der Richtung, in der ein identifiziertes Hindernis liegt. Eine Kante kann aber auch aus einer (tatsächlichen) Bewegung des mobilen Geräts gewonnen werden, z.B. durch Odometrie. Nach einer bestimmten Strecke, die sich das mobile Gerät bewegt hat, kann dann z.B. ein neuer Knoten ergänzt werden, wobei gleichzeitig Umgebungsinformationen erfasst und gespeichert werden. Eine solche Kante soll nachfolgend auch als Bewegungskante bezeichnet werden. Wenn das mobile Gerät nach längerem Aufenthalt in zuvor unbekannter Umgebung wieder eine bekannte Umgebung (in der schon einmal Umgebungsinformationen erfasst wurden) erreicht, kann versucht werden, die früheren mit den aktuellen Umgebungsinformationen derselben Umgebung zu verknüpfen ("matchen"). Dabei gibt es zwei Knoten bzw. Orte, bei denen Umgebungsinformationen erfasst werden. Wenn das Verknüpfen (oder Angleichen) erfolgreich ist, kann eine Kante zwischen diesen beiden Knoten gebildet werden. Eine solche Kannte wird nachfolgend auch als Loop-Closure-Kante bezeichnet, da damit sozusagen eine Schleife geschlossen wird.

Das mobile Gerät wird dabei so betrieben, dass Umgebungsinformation erhalten werden, z.B. durch ein Steuergerät des mobilen Geräts, die insbesondere mittels eines oder mehrerer Sensoren wie z.B. Videokameras, Radar-Sensoren, Lidar-Sensoren, Laser-Entfernungsmesser, Ultraschallsensoren, Inertialsensoren und/oder Odometern erfasst werden. Diese Umgebungsinformationen umfassen damit also z.B. Video- bzw. Kameradaten, Entfernungsangaben zu Hindernissen oder zurückgelegte Strecken. Basierend auf diesen Umgebungsinformationen sowie einem aktuellen SLAM-Graphen bzw. einer entsprechenden Karte und z.B. durch Anwendung eines geeigneten SLAM-Algorithmus wird eine aktuelle Pose bzw. Position und/oder Orientierung des mobilen Geräts bestimmt.

Basierend darauf können dann Steuerungsanweisungen zum Betreiben des mobilen Geräts bestimmt bzw. erzeugt werden, die dann durch das mobile Gerät umgesetzt werden können, oder zunächst dorthin übermittelt werden können (falls die Berechnungen außerhalb des mobilen Geräts erfolgen, z.B. auf einem gerätefremden Rechensystem, z.B. in einer sog. Cloud). Die Steuerungsanweisungen können z.B. im Rahmen eines Steuerungsalgorithmus bestimmt werden. Dies wiederholt sich immer wieder, z.B. alle 50 cm. Auf diese Weise kann das mobile Gerät z.B. seine Arbeit wie Saugen verrichten, ebenso aber auch die Karte immer weiter verbessern.

Durch ständiges Hinzufügen von Knoten und Kanten zum SLAM-Graphen wird dieser allerdings immer größer, d.h. die Datenmenge wird größer und sämtliche Berechnungen, die auf dem SLAM-Graphen basieren, benötigen mehr Rechenleistung und/oder mehr Zeit.

Eine Lösung für dieses Problem ist, den SLAM-Graphen auszudünnen, d.h. Knoten und/oder Kanten daraus zu entfernen und so die Datenmenge zu reduzieren. Dies führt allerdings zu einem anderen Problem: die Genauigkeit der durch den SLAM-Graphen dargestellten Karte kann mitunter deutlich reduziert werden bzw. deren Informationsgehalt kann schwinden. Vor diesem Hintergrund wird eine Möglichkeit vorschlagen, einen SLAM-Graphen auszudünnen, sodass dessen Größe reduziert wird, die Genauigkeit allerdings möglichst gut erhalten bleibt.

Hierzu wird der SLAM-Graph (als Datensatz, in dem also die Knoten und Kanten und ggf. weitere Informationen enthalten sind) erhalten, z.B. direkt in einer Recheneinheit oder einem Steuergerät des mobilen Geräts oder auch in einer externen Recheneinheit. Dann werden Knoten aus dem SLAM-Graphen entfernt, um einen aktualisierten SLAM-Graphen (also z.B. einen aktualisierten Datensatz), zu erhalten; dieser wird ausgegeben, z.B. an eine entsprechende Einheit im mobilen Geräten oder dort im Steuergerät. Dabei umfasst das Entfernen eines Knotens jeweils das Bestimmen desjenigen der Vielzahl an Knoten, dessen skaleninvariante Dichte an weiteren Knoten um diesen Knoten am höchsten ist, und dann das Entfernen des auf diese Weise bestimmten Knotens, dessen Dichte am höchsten ist, aus dem SLAM-Graphen.

Um die Anzahl der Knoten innerhalb des SLAM-Graphen zu begrenzen, ist es in der Regel nötig, die Knoten im Laufe der Zeit gewissenhaft zu entfernen. Im Allgemeinen kommen hierfür zumindest zwei Strategien in Betracht. Eine Strategie ist, einen oder mehrere Knoten auszuwählen und zu entfernen (auch als "Marginalisieren" bezeichnet). Eine andere Strategie ist, zwei oder mehr Knoten auszuwählen und sie zu einem zu verschmelzen. Im Fall von auf Lidar-Sensoren basierendem SLAM hat die zweite Strategie z.B. den Nachteil, dass die Lidar-Scans (Umgebungsinformationen) fusioniert werden müssen und die Position des neuen Knotens nicht mit der Position übereinstimmt, an der die Lidar-Scans ursprünglich aufgenommen wurden. Somit ist es nicht mehr möglich, eine Nachverfolgung von Lidar-Strahlen im Raum (die zu den Umgebungsinformationen geführt haben) auf einfache Weise durchzuführen, was für bestimmte Algorithmen wichtig ist. Außerdem müssen alle weiteren Informationen, die mit den beteiligten Knoten verknüpft sein können, ebenfalls fusioniert werden. Schließlich ist der fusionierte Knoten nicht zwangsläufig Teil der ursprünglichen Trajektorie und könnte sich z.B. auf unpassierbarem Bereich (z.B. in einem Hindernis) befinden. Aus diesen Gründen bietet es sich an, die erste Strategie zu verwenden.

Hier sind dann die Knoten zum Entfernen zu bestimmen. Im Allgemeinen könnte die gleichzeitige Entfernung mehrerer Knoten in Betracht gezogen werden und ein kombinierter Effekt dieser Operation analysiert werden. Dies ist jedoch schwierig zu analysieren, sodass das Entfernen einzelner Knoten bevorzugt ist. Als zu entfernender Knoten sollte ein Knoten ausgewählt werden, der für die Gesamtabbildungsqualität (d.h. für die Qualität der Darstellung der Karte durch den SLAM-Graphen) von geringer Bedeutung ist und dessen Entfernung die zukünftige Leistung des SLAM-Algorithmus so wenig wie möglich beeinträchtigt. Um die Bedeutung eines Knotens zu quantifizieren, können geometrische oder informationstheoretische Maße verwendet werden.

Informationstheoretische Maße versuchen, die in jedem Knoten enthaltenen Informationen oder die Informationen des zugehörigen Laser-Scans (bzw. allgemein der erfassten Umgebungsinformationen) zu quantifizieren. Vorteilhaft ist, den Knoten so zu entfernen, dass der Informationsverlust minimiert wird. Das Hauptproblem bei diesem Ansatz besteht allerdings darin, dass die tatsächlichen Informationen innerhalb eines Scans kaum zu quantifizieren sind. Die Informationen können basierend auf den Besetzungswahrscheinlichkeiten von Zellen in einer probabilistischen Gitterkarte berechnet werden. Wie sich gezeigt hat, tendiert **jedoch dieser** Ansatz dazu, Scans mit hohem Rauschen, falschen Messungen oder schlechter Ausrichtung als hochinformativ zu betrachten, da sie die Wahrscheinlichkeiten innerhalb der Rasterkarte stärker beeinflussen als gut ausgerichtete Scans mit geringem Rauschen, die gut mit anderen Scans der Umgebung übereinstimmen. Außerdem ist die Berechnung der Informationen sehr aufwändig, da alle Punkte in Scans innerhalb des Bereichs des aktuellen Knotens das Ergebnis beeinflussen. Dies kann insbesondere bei Lidar-Sensoren mit großer Reichweite und hoher Auflösung problematisch sein.

Vorzugsweise werden daher geometrische Methoden zum Entfernen von Knoten verwendet. Die Grundidee besteht darin, die Dichte der Knoten zu betrachten und insbesondere über die gesamte Karte hinweg unter einem bestimmten Schwellwert zu halten, d.h. es werden Knoten an Orten (in der Umgebung) entfernt, an denen sich viele Knoten in einem kleinen Bereich ansammeln. Zu diesem Zweck wird ein neuartiges Dichtemaß vorgeschlagen, das nachfolgend als skaleninvariante Dichte bezeichnet werden soll.

Eine Dichte für einen Knoten kann als eine Anzahl an weiteren Knoten innerhalb eines bestimmten Bereichs um diesen Knoten, z.B. innerhalb eines bestimmten Radius um diesen Knoten definiert werden.

Für $v_1, \dots, v_n \in \mathbb{R}^2$, wobei $v_i \neq v_j$ für $i \neq j$, kann für einen Radius r > 0 eine solche Dichte für einen Knoten $v_i$ wie folgt definiert werden:

$$d_r(v_i) = \frac{\#\{||v_j - v_i|| < r : 1 \leq j \leq n, i \neq j\}}{\pi r^2}$$

wobei $\|.\|$ die Euklidische Norm angibt. Dies entspricht damit der Anzahl (#) an Knoten innerhalb eines Kreises mit Radius r um den Knoten $v_i$, aber ohne diesen Knoten selbst.

Diese Dichte hängt allerdings stark vom gewählten Wert für den Radius ab, z.B. könnte eine hohe Anzahl an weiteren Knoten knapp außerhalb des gewählten Radius liegen. Damit würde die eigentliche Dichte für diesen Knoten stark unterbestimmt.

Dies wird mittels einer skaleninvarianten Dichte adressiert. Diese gibt z.B. für einen Knoten ein Maß für über verschiedene Radien bestimmte einfache Dichten (wie oben) an. Dies kann z.B. durch eine Integration der oben genannten (einfachen) Dichte über alle r erfolgen. Die skaleninvariante Dichte $d(v_i)$ für den Knoten $v_i$ ergibt sich dann durch:

$$d(v_i) = \int_0^\infty d_r(v_i) dr$$

Diese skaleninvariante Dichte hängt nun nicht mehr von der Wahl eines bestimmten Werts für den Radius ab und vermeidet so etwaige falsche Bestimmungen von Dichten für Knoten. Das Integral stellt gewissermaßen einen Mittelwert über eine hohe bzw. unendliche Zahl möglicher Radien dar. Es lässt sich zudem zeigen, dass (zumindest für die vorliegenden Erfordernisse) diese Darstellung äquivalent ist zu folgender Darstellung:

$$d(v_i) = \frac{1}{\pi} \sum_{k=1}^{n-1} r_k^{-1}$$

Damit lässt sich die skaleninvariante Dichte deutlich schneller und einfacher Berechnen. Zudem kann diese Summendarstellung trunkiert werden auf z.B. eine bestimmte Anzahl an nächstbenachbarten weiteren Knoten zu einem bestimmten Knoten.

Vorzugsweise werden dabei so viele Knoten auf diese Weise entfernt, bis die skaleninvariante Dichte bei allen Knoten unterhalb eines bestimmten Schwellwerts, einem Dichteschwellwert liegt. Alternativ oder zusätzlich ist es bevorzugt, wenn so viele Knoten entfernt werden, bis eine Anzahl an Knoten im SLAM-Graphen unterhalb eines bestimmten Schwellwerts, eines Knotenschwellwerts liegt. In diesem Fall ist es allerdings zweckmäßig, wenn dieser Knotenschwellwert in Abhängigkeit von einer geometrischen Größe einer durch den SLAM-Graphen repräsentierten Umgebung vorgegeben wird, z.B. proportional hierzu ist. So kann die gewünschte Anzahl an verbleibenden Knoten bei doppelt so großer Fläche der Umgebung auch doppelt so groß sein. Die durchschnittliche Dichte an Knoten hängt dann nicht von der Größe der Umgebung ab. Denkbar ist aber auch, dass beide Varianten kombiniert werden, d.h. dass beide Schwellwerte unterschritten werden müssen.

Vorteilhaft ist es zudem, wenn eine vorbestimmte Anzahl an zuletzt zum SLAM-Graphen hinzugefügten Knoten beim Entfernen von Knoten nicht berücksichtigt wird. Diese Knoten werden dann z.B. bereits beim Bestimmen des Knotens mit der höchsten skaleninvarianten Dichte nicht berücksichtigt, und dann entsprechend auch nicht entfernt. Bei der Bestimmung der skaleninvarianten Dichte für andere Knoten sollten diese zuletzt hinzugefügten Knoten allerdings berücksichtigt werden; andernfalls würde z.B. die gewünschte maximale Gesamtzahl an Knoten nicht erreicht. Auf diese Weise kann die Robustheit des Verfahrens gesteigert werden.

Das Entfernen eines Knotens führt dazu, dass diejenigen Kanten, die an dem entfernten Knoten endeten, nicht mehr definiert sind. Der Graph kodiert im Grunde eine gemeinsame Wahrscheinlichkeitsverteilung von Zufallsvariablen, die durch alle Knoten repräsentiert werden. Somit entspricht das Entfernen eines Knotens der Marginalisierung bzw. dem Entfernen einer Zufallsvariable. Vorzugsweise umfasst das Entfernen eines Knotens aus dem SLAM-Graphen daher jeweils zusätzlich ein Verknüpfen derjenigen Endpunkte von Kanten, die durch den entfernten Knoten definiert waren, mit jeweils einem anderen Knoten. Mit anderen Worten werden also die Knoten die über Kanten mit dem entfernten Knoten verbunden waren, neu verbunden.

Zum Lösen dieses Problems kann eine sog. n-Gruppen-Bedingung (auch "n-ary constraint") zwischen allen dem entfernten Knoten benachbarten Knoten definiert werden. Diese benachbarten Knoten könnten dann z.B. paarweise mit Kanten verbunden werden (die bisherigen Kanten würden dann entfernt), was jedoch zu einer hohen Anzahl an Kanten führt und unerwünscht ist, wenn die Datenmenge reduziert werden soll. Wie sich gezeigt hat, besteht ein Problem beim Umgang mit den Kanten des entfernten Knotens darin, dass dabei falsche Loop-Closure-Kanten entstehen können, die also nichts mit der Wirklichkeit und der tatsächlichen Bewegung des mobilen Geräts zu tun haben. Viele Algorithmen können zwar mit einer geringen Anzahl an solchen falschen Loop-Closure-Kanten umgehen, eine zu hohe Anzahl ist allerdings schwierig zu handhaben. Wie sich gezeigt hat, besteht ein Problem auch darin, dass solche falsche Loop-Closure-Kanten bei deren Bewertung zum Informationsgehalt durch einen Algorithmus keine höhere Unsicherheit aufweisen als echte Loop-Closure-Kanten.

Wenn bei obigem Beispiel mit dem paarweisen Verbinden der benachbarten Knoten z.B. zuvor eine von $n$ Kanten des entfernten Knotens falsch war, ergeben sich durch das paarweise Verbinden $n \cdot (n - 1)/2$ neue Kanten, wovon $n-1$ falsch sind. Das Verhältnis falscher zu echter Kanten wird damit von $1/n$ auf $2/n$ erhöht. Wenn dort, wo eine neue Kante zwischen zwei benachbarten Knoten erzeugt wird, schon eine (echte) Kante vorhanden war, würde diese ersetzt oder mit einer neuen Kante fusioniert, was zu einem noch schlechteren Verhältnis führt.

Wie sich gezeigt hat, sind Kanten, die durch Bewegung des mobilen Geräts entstehen, die erwähnten Bewegungskanten, deutlich zuverlässiger bzw. genauer als Loop-Closure-Kanten, selbst, wenn beide Kanten die gleiche Unsicherheit aufweisen. Während z.B. die Odometrie für Bewegungskanten zwar über die Zeit etwas abdriften kann, sind solche Kanten im Unterschied zu Loop-Closure-Kanten in der Regel nicht durch Ausreißer mit großem Fehler beeinflusst. Vor diesem Hintergrund ist es bevorzugt, beim Umgang mit den an einem entfernten Knoten endenden Kanten auf (verlässlichere) Bewegungskanten bzw. eine Bewegungskette (also eine Kette von Bewegungskanten) abzustellen als auf Loop-Closure-Kanten bzw. Schleifenschlüsse.

Eine Möglichkeit wäre auch, einen solchen benachbarten Knoten auszuwählen und alle Kanten (bzw. Endpunkte der Kanten), die an dem entfernten Knoten endeten, mit diesem ausgewählten Knoten zu verbinden. Dabei könnte z.B. eine Summe der Länge der dadurch entstehenden bzw. veränderten Kanten minimiert werden. Hierbei würde aber die Zuverlässigkeit von Bewegungskanten bzw. Bewegungsketten nicht berücksichtigt. Demgegenüber werden, wie erwähnt, die Kanten, die an dem entfernten Knoten endeten, zwar weiterhin jeweils mit einem anderen Knoten verknüpft, sodass sie dort enden, nicht jedoch (zumindest nicht notwendigerweise) alle mit demselben Knoten.

Vielmehr wird derjenige der dem entfernten Knoten benachbarten Knoten, an dem eine Kante nun enden soll, bevorzugt dadurch ausgewählt, dass der unverbundene Endpunkt der Kante vor oder zurück entlang einer Bewegungskette bewegt wird, bis ein anderer Knoten erreicht wird. Die Bewegungskette gibt die (zeitliche) Abfolge von Knoten an, entlang derer sich das mobile Gerät bewegt hat. Für jeden Knoten gibt es damit auf der Bewegungskette einen zeitlich davor und einen zeitlich danach erzeugten Knoten. Ausgehend von dem entfernten Knoten werden also z.B. der zeitlich davor und der zeitlich danach erzeugte Knoten gesucht und der unverbundene Endpunkt der Kante wird mit einem der beiden Knoten verknüpft. Zweckmäßigerweise wird derjenige der beiden Knoten gewählt, bei dem die dadurch entstehende Kante am kürzesten ist, d.h. bei der die Länge am geringsten ist, d.h. geringer als bei anderen theoretisch möglichen Kanten. Auf diese Weise werden die verlässlichen Bewegungskanten bzw. Bewegungsketten berücksichtigt. Bei diesem Vorgehen gibt es auch zwei Kanten, die selbst Teil der Bewegungskette sind (es handelt sich also um Bewegungskanten). Diese beiden Kanten werden durch eine neue Kante zwischen ihren verbliebenen Knoten ersetzt.

Bei diesem Vorgehen, d.h. dem Verknüpfen von Endpunkten von Kanten mit neuen Knoten, handelt es sich letztlich um das Verketten von Kanten. Hierfür gibt es typischerweise drei verschiedene Möglichkeiten. Zwei Kanten können verknüpft werden, sie können kombiniert werden, und eine Kante kann invertiert werden. Zwei Kanten (einmal von Knoten a nach Knoten b und einmal von Knoten b nach Knoten c) werden z.B. verknüpft, indem eine neue Kante von Knoten a nach Knoten c anstelle der beiden vorigen erzeugt wird. Knoten b ist dabei der entfernte Knoten. Dies kann mit den beiden Kanten gemacht werden, die Teil der Bewegungskette sind, wie vorstehend erwähnt. Beim Kombinieren von zwei Kanten werden z.B. deren Bedingungen ("constraints") durch Multiplizieren deren beider Gauß-Verteilungen kombiniert. Jede Kante hat eine gewisse Unsicherheit, die z.B. über eine Gauß-Verteilung modelliert werden kann bzw. modelliert ist.

Die Gauß-Verteilung beschreibt dabei die Wahrscheinlichkeitsverteilung des Fehlers der Kante. Der Fehler ist dabei in der Regel der Unterschied zwischen der relativen Pose, die in der Kante gespeichert ist, und der relativen Pose der Knoten, welche die Kante verbindet. Das Invertieren einer Kante kann z.B. über eine Lie-Algebra erfolgen.

Näheres zu diesen drei Möglichkeiten und deren Anwendung wird z.B. in "E. Eade, P. Fong, and M. E. Munich, "Monocular graph SLAM with complexity reduction," in Proc. IEEE/RSJ Int. Conf. Intelligent Robots and Systems, 2010, pp. 3017-3024." beschrieben. Bei diesem Vorgehen wird die Anzahl falscher Loop-Closure-Kanten im Wesentlichen nicht verändert, da keine Loop-Closure-Kanten neu erzeugt oder gelöscht werden; stattdessen wird nur der eine Knoten der Kante geändert. Allerdings kann es durch Kombination von Kanten passieren, dass mehrere Kanten zusammenfallen. Bei obigem Beispiel wird die Anzahl der Kanten von *n* auf *n*-1 reduziert, das Verhältnis falscher zu echten Kanten dann von 1/*n* auf 1/(*n*-1), also nur geringfügig erhöht, nicht aber verdoppelt.

Beim Kombinieren zweier Kanten kann es vorkommen, dass diese sich widersprechen. Dies kann z.B. durch Betrachtung der relativen Pose für beide Kanten (eine relative Pose einer Kante entspricht einer Differenz der Posen der Knoten an den Endpunkten der Kante) oder durch eine Mahalonobis-Distanz bestimmt oder herausgefunden werden. Wenn von den beiden Kanten eine eine Loop-Closure-Kante und eine eine Bewegungs-Kante ist, wird die Loop-Closure-Kante entfernt. Wenn beide Kanten Loop-Closure-Kanten sind, werden beide entfernt. Dies ist insofern von Vorteil, als das Verlieren einer echten bzw. richtigen Loop-Closure-Kante in der Regel besser ist als das Erzeugen einer falschen Loop-Closure-Kante.

Wenngleich mit dem Entfernen von Knoten auch zugehörige Kanten aus dem SLAM-Graphen entfernt werden können, ist es bevorzugt, unabhängig von einem Entfernen eines Knotens, Kanten aus dem SLAM-Graphen zu entfernen. Dies ist insbesondere in Bereichen zweckmäßig, in denen die Knoten nicht besonders dicht verteilt sind. Auch werden beim Entfernen von Knoten ggf. neue Kanten erzeugt, die auf diese Weise entfernt werden können. Grundsätzlich können Kanten damit aber auch ohne jegliche Entfernung von Knoten entfernt werden (entweder, weil dies gar nicht erst angewendet wird, oder weil z.B. die Dichte nirgends über dem Schwellwert liegt) wodurch ebenfalls die Größe des SLAM-Graphen bzw. dessen Datenmenge reduziert werden kann, zumal die in den Kanten enthaltenen Informationen entfernt werden.

Das Entfernen einer Kante umfasst dabei jeweils das Bestimmen desjenigen der Vielzahl an Knoten, an dem die meisten Kanten enden; damit können Kanten entfernt werden, wo deren Dichte hoch ist. Von den an diesem Knoten endenden Kanten ist dann anhand eines Kriteriums die zu entfernende Kante auszuwählen. Eine Möglichkeit ist, diejenige Kante mit dem geringsten Residuum oder dem geringsten Chi-Quadrat-Fehler zu entfernen. Dann würden aber Kanten mit großem Fehler behalten, welche meistens Kanten mit starkem Rauschen oder falsche Loop-Closure-Kanten sind. Ein großer Fehler kann bedeuten, dass die Kante falsch ist, er kann aber auch bedeuten, dass das derzeitige Optimum der Graphoptimierung stark vom wahren Optimum abweicht. Wird die Kante dann entfernt, so geht ggf. Information verloren, mit deren Hilfe das "wahre" Optimum hätte gefunden werden können.

Zweckmäßig ist es demgegenüber, wenn aus den Kanten, die an dem bestimmten Knoten enden, diejenige Kante bestimmt wird, die die größte Kovarianz oder die geringste Information aufweist; dann wird die auf diese Weise bestimmte Kante, also diejenige mit der geringsten Kovarianz bzw. Information, entfernt. Die Kovarianz oder Information einer Kante oder ein Maß hierfür kann z.B. anhand der Spur oder der Determinante der zugehörigen Matrix (Kovarianz-Matrix oder Informations-Matrix) der Kante bestimmt werden. Bevorzugt ist dabei die Verwendung der Information aufgrund der etwas einfacheren Berechnung.

Zweckmäßigerweise werden (nur) so viele Kanten aus dem SLAM-Graphen, unabhängig von einem Entfernen eines Knotens, entfernt, bis eine Anzahl an Kanten, die an demselben Knoten enden, bei allen Knoten unterhalb eines Schwellwerts, eines sog. Kantenschwellwerts liegt. Auf diese Weise werden nicht zu viele Kanten entfernt und es wird eine gleichmäßige Verteilung erreicht.

Das Entfernen von Kanten birgt grundsätzlich die Gefahr, dass auch für den SLAM-Graphen bzw. die Karte wichtige Kanten entfernt werden, z.B. solche, die wichtige globale Loop-Closure-Kanten sind; es könnte sogar der gesamte SLAM-Graph aufgetrennt werden. Insofern ist es zweckmäßig, wenn eine Kante nur dann entfernt wird (insbesondere beim Entfernen von Kanten unabhängig vom Entfernen von Knoten), wenn ein Faktor, der ein Verhältnis einer Länge eines kürzesten die Kante nicht enthaltenden Pfades zwischen den zwei Knoten, an denen die Kante endet, und einer Länge der Kante angibt, unterhalb eines Schwellwerts, eines sog. Faktorschwellwerts liegt. Während eine Kante die kürzeste Verbindung (einen Pfad) zwischen zwei Knoten angibt (die Länge der Kante), ergibt sich für einen Pfad zwischen diesen zwei Knoten nach Entfernen der Kante zwangsläufig ein längerer Weg, der z.B. über einen oder mehrere weitere Knoten und entsprechenden Kanten führt. Wenn dieser neue Pfad dann sehr viel länger als die entfernte Kante ist, deutet dies darauf hin, dass die entfernte Kante eine wichtige Kante bzw. Verbindung ist. Vor diesem Hintergrund kann ein solcher Faktorschwellwert (der zwangsläufig größer als eins ist und z.B. zwischen zwei und fünf liegen kann) eingeführt werden, der aber nicht zu groß gewählt werden sollte.

Unabhängig davon ist es bevorzugt, wenn eine Kante nur dann entfernt wird (insbesondere beim Entfernen von Kanten unabhängig vom Entfernen von Knoten), wenn es sich um eine Loop-Closure-Kante handelt. Damit werden die Bewegungskanten grundsätzlich nicht entfernt; wie schon erwähnt, sind diese in aller Regel sehr verlässlich. Die Bewegungskanten werden insbesondere zwar beim Bestimmen der Anzahl an Kanten pro Knoten mitgezählt, sie werden allerdings nicht entfernt.

Insgesamt kann mit dem vorgeschlagenen Vorgehen ein SLAM-Graph besonders schnell und effizient ausgedünnt werden, sodass dessen Größe (Datenmenge) nicht zu groß wird. Beispielsweise kann das Ausdünnen regelmäßig, z.B. nach jedem neuen Hinzufügen von Umgebungsinformationen an einem Ort (Knoten) oder auch nach mehreren Malen hiervon erfolgen. Im Wesentlichen bleibt die Größe des SLAM-Graphen bzw. dessen Datenmenge damit konstant, und zwar unabhängig von der Zeitdauer, über welche hinweg Daten zum SLAM-Graphen hinzugefügt werden. Dies erlaubt ein lebenslanges SLAM. Während die Geschwindigkeit, mit der ein SLAM-Algorithmus einen solchen SLAM-Graphen verarbeitet, hoch bleibt, wird die Genauigkeit des SLAM-Graphen bzw. der entsprechenden Karte kaum reduziert.

Weiterhin betrifft die Erfindung den Betrieb eines mobilen Geräts, insbesondere eines Roboters, wobei Umgebungsinformation, die insbesondere mittels eines oder mehrerer Sensoren erfasst werden, erhalten werden, und eine aktuelle Position und/oder Orientierung (z.B. Pose) des mobilen Geräts basierend auf einem aktuellen SLAM-Graphen (bzw. entsprechenden Daten, die diesen SLAM-Graphen repräsentieren) bzw. einer entsprechenden Karte und den Umgebungsinformationen bestimmt wird, z.B. durch Anwendung eines geeigneten SLAM-Algorithmus. Dann werden Steuerungsanweisungen zum Betreiben des mobilen Geräts basierend auf der aktuellen Position und/oder Orientierung bestimmt und durch das mobile Gerät umgesetzt.

Hierbei kann nun als der aktuelle SLAM-Graph ein früherer SLAM-Graph verwendet werden, der gemäß vorstehendem Vorgehen ausgedünnt bzw. aktualisiert worden ist, z.B. nach dem vorhergehenden Erhalt von Umgebungsinformationen. Ebenso kann der aktuelle SLAM-Graph dann auch unter Verwendung der Umgebungsinformation erweitert und dann gemäß vorstehendem Vorgehen ausgedünnt werden, und zwar zur späteren Verwendung als aktueller SLAM-Graph.

Eine erfindungsgemäße Recheneinheit, z.B. ein Steuergerät eines Roboters, ist, insbesondere programmtechnisch, dazu eingerichtet, ein erfindungsgemäßes Verfahren durchzuführen.

Die Erfindung betrifft außerdem ein mobiles Gerät mit einer solchen Recheneinheit (z.B. als Steuergerät) sowie einem oder mehreren der eingangs genannten Sensoren. Das mobile Gerät ist bevorzugt als Roboter, insbesondere als Haushaltsroboter, z.B. Saug- und/oder Wischroboter, Boden- oder Straßenreinigungsgerät oder Rasenmähroboter, als ein zumindest teilweise automatisiertes Fahrzeug, oder als eine Drohne ausgebildet.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Schließlich ist ein maschinenlesbares Speichermedium vorgesehen mit einem darauf gespeicherten Computerprogramm wie oben beschrieben. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnungen

Figur 1a zeigt schematisch ein erfindungsgemäßes mobiles Gerät in einer bevorzugten Ausführungsform in einer Umgebung.

Figur 1b zeigt schematisch einen Ablauf eines erfindungsgemäßen Verfahrens in einer weiteren bevorzugten Ausführungsform.

Figur 1c zeigt schematisch einen Ablauf eines erfindungsgemäßen Verfahrens in einer weiteren bevorzugten Ausführungsform.

Figuren 2a und 2b zeigen eine Umgebung mit SLAM-Graph ohne und mit Ausdünnung gemäß einem erfindungsgemäßen Verfahren in bevorzugter Ausführungsform.

Figuren 3a bis 3c zeigen eine Umgebung mit SLAM-Graph ohne Ausdünnung, mit nicht erfindungsgemäßer Ausdünnung und mit Ausdünnung gemäß einem erfindungsgemäßen Verfahren in bevorzugter Ausführungsform.

Figuren 4a, 4b und 5a, 5b zeigen Zeitdauern von Scans und eine Anzahl an Knoten bei verschiedenen Umgebungen bei Anwendung eines erfindungsgemäßen Verfahrens in bevorzugter Ausführungsform.

Ausführungsform(en) der Erfindung

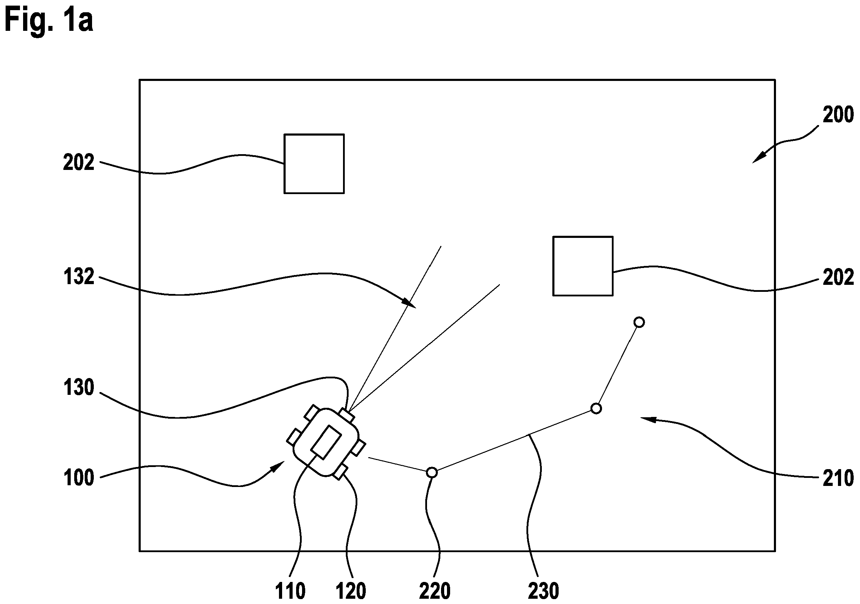

In Figur 1a ist schematisch ein erfindungsgemäßes mobiles Gerät 100 in einer bevorzugten Ausführungsform in einer Umgebung 200, z.B. einem Raum, dargestellt. Bei dem mobilen Gerät 100 kann es sich beispielhaft um einen Staubsaugerroboter mit Rädern 120, einer als Steuergerät ausgebildeten Recheneinheit 110 sowie einem Lidar-Sensor 130 mit einem Blickfeld 132 handeln. Zur besseren Veranschaulichung ist das Blickfeld 132 hier relativ klein gewählt; in der Praxis kann das Blickfeld aber auch bis zu 360° betragen (z.B. aber zumindest mindestens 180° oder mindestens 270° betragen); bei 360° ist das vorgeschlagene Verfahren sogar besonders effizient. Der Staubsaugerroboter 100 befindet sich auf einem Untergrund des Raums 200, der z.B. durch Wände begrenzt wird und zwei Hindernisse 202 aufweist.

Außerdem ist beispielhaft ein SLAM-Graph 210 mit einigen Knoten 220 und Kanten 230, die jeweils zwei Knoten verbinden, gezeigt. Ein Knoten 220 repräsentiert jeweils einen Ort, an dem der Staubsaugerroboter Umgebungsinformationen erfasst, z.B. mittels des Lidar-Sensors 130, sowie die zugehörige Pose. Die Kanten 230 stellen hier Bewegungskanten dar, die sich durch Abfahren des Weges zwischen zwei Knoten ergeben und z.B. über Odometrie erfasst werden.

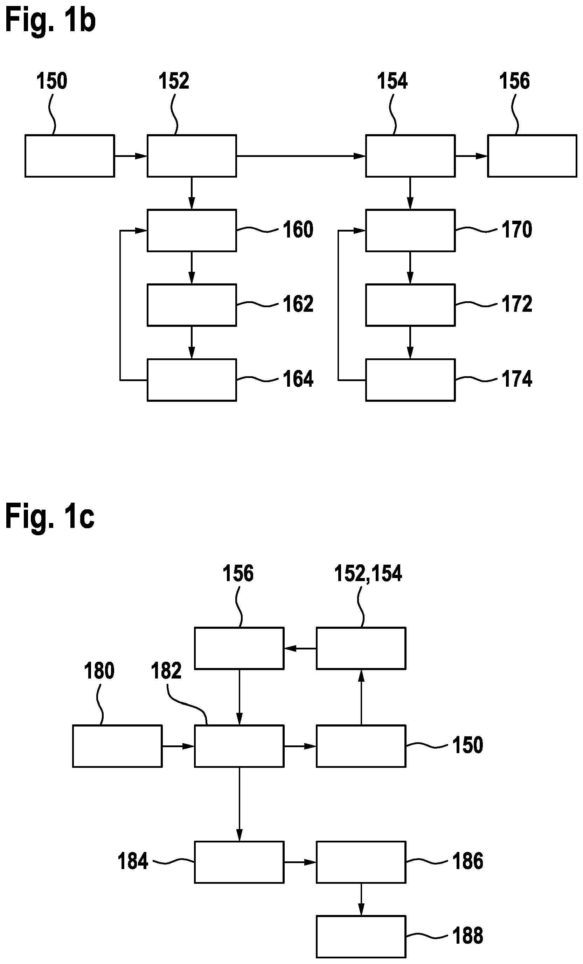

In Figur 1b ist schematisch ein Ablauf eines erfindungsgemäßen Verfahrens in einer weiteren bevorzugten Ausführungsform dargestellt, und zwar zum Ausdünnen eines SLAM-Graphen, der zum Betreiben des mobilen Geräts verwendet wird. Hierbei wird in einem Schritt 150 der SLAM-Graph erhalten, z.B. als Datensatz. Dieser umfasst die Knoten mit Posen und zugehörigen Umgebungsinformationen und die Kanten zwischen den Knoten. Die Kanten können neben Bewegungskanten auch schon Loop-Closure-Kanten umfassen.

In einem Schritt 152 werden dann Knoten aus dem SLAM-Graphen entfernt. Danach könnten, in einem Schritt 154, Kanten aus dem SLAM-Graphen entfernt werden, und zwar unabhängig vom Entfernen von Knoten.

Anschließend wird, in einem Schritt 156, ein aktualisierter SLAM-Graph ausgegeben, z.B. wieder als Datensatz. Gegenüber dem zuvor erhaltenen SLAM-Graphen fehlen dort dann die entfernten Knoten und die entfernten Kanten, und es sind ggf. einige andere oder neue Kanten hinzugefügt, wie es sich beim Entfernen von Knoten ergeben kann. Der auf diese Weise erhaltene aktualisierte SLAM-Graph kann dann zum Betreiben des mobilen Geräts verwendet werden, wie später in Bezug auf Figur 1c näher erläutert werden soll. Beispielsweise kann das Ausdünnen in einer externen Recheneinheit erfolgen, sodass der SLAM-Graph dort vom mobilen Gerät erhalten und danach aktualisiert wieder dorthin übermittelt wird. Ebenso kann dies aber in einer internen Recheneinheit, z.B. einer Steuereinheit des mobilen Geräts erfolgen. Dann wird der Graph z.B. von einer internen Speichereinheit erhalten bzw. dorthin übermittelt.

Der Schritt 152, das Entfernen von Knoten, kann das Entfernen eines oder mehrere Knoten umfassen. Das Entfernen eines Knotens umfasst dabei ebenfalls wieder mehrere Schritte. In einem Schritt 160 wird zunächst aus allen Knoten derjenige bestimmt, dessen skaleninvariante Dichte an weiteren Knoten um diesen Knoten am höchsten ist. Gemäß Schritt 162 wird dieser dabei bestimmte Knoten dann aus dem SLAM-Graphen entfernt.

Nach dem Entfernen des Knotens werden, in einem Schritt 164, die nun unverbundenen Endpunkte von Loop-Closure-Kanten, die an dem entfernten Knoten endeten, mit jeweils einem anderen Knoten verknüpft. Dabei wird der neue Knoten für jeden Endpunkt jeweils dadurch ausgewählt, dass der unverbundene Endpunkt vor oder zurück entlang einer Bewegungskette bewegt wird, wobei die Auswahl in Abhängigkeit von der Länge der neu entstehenden Kante erfolgt. Die zwei Bewegungskanten, die durch den entfernten Knoten definiert waren, können, wie erwähnt, z.B. kombiniert werden. So wird z.B. aus zwei Bewegungskanten von a nach b und von b nach c dann eine Kante von a nach c.

Die Schritte 160, 162 und 164 werden solange wiederholt, d.h. es werden so lange bzw. so viele Knoten aus dem SLAM-Graphen entfernt, bis die skaleninvariante Dichte bei allen Knoten unterhalb eines Dichteschwellwerts liegt. Dies kann z.B. bei Schritt 160 festgestellt werden, indem der Knoten mit der höchsten skaleninvarianten Dichte bestimmt wird. Ebenso kann dies - im Sinne eines Abbruchkriteriums - so lange wiederholt werden, bis die (gesamte) Anzahl an Knoten im SLAM-Graphen unterhalb eines Knotenschwellwerts liegt, wobei der Knotenschwellwert in Abhängigkeit von einer geometrischen Größe der durch den SLAM-Graphen repräsentierten Umgebung vorgegeben wird.

Der Schritt 154, das Entfernen von Kanten aus dem SLAM-Graphen unabhängig vom Entfernen von Knoten, umfasst für das Entfernen einer Kante zunächst, in Schritt 170, das Bestimmen desjenigen der Vielzahl an Knoten, an dem die meisten Kanten enden. In Schritt 172 wird aus diesen Kanten dann diejenige Kante bestimmt, die die größte Kovarianz aufweist oder die geringste Information zum Graphen beiträgt. Diese wird in Schritt 174 dann entfernt. Dies kann insbesondere nur dann erfolgen, wenn es sich um eine Loop-Closure-Kante handelt.

Die Schritte 170, 172 und 174 werden solange wiederholt, d.h. es werden so lange bzw. so viele Kanten aus dem SLAM-Graphen entfernt, bis die Anzahl an Kanten, die ein Knoten begrenzt, bei allen Knoten unterhalb eines Kantenschwellwerts liegt.

In Figur 1c ist schematisch ein Ablauf eines erfindungsgemäßen Verfahrens in einer weiteren bevorzugten Ausführungsform dargestellt, und zwar das Betreiben des mobilen Geräts. Hierzu werden zunächst, in Schritt 180, Umgebungsinformation erhalten, die mittels eines oder mehrerer Sensoren erfasst werden, z.B. mittels des Lidar-Sensors gemäß Figur 1a. Es handelt sich damit um Sensordaten.

In Schritt 182 werden diese Umgebungsinformationen dann einem SLAM-Algorithmus zugeführt, um, in Schritt 184, unter Berücksichtigung aktueller Odometrie-Informationen eine aktuelle Position und/oder Orientierung des mobilen Geräts basierend auf einem aktuellen SLAM-Graphen bzw. entsprechenden Daten und den Umgebungsinformationen zu bestimmen.

In Schritt 186 werden dann basierend auf der aktuellen Position und/oder Orientierung Steuerungsanweisungen zum Betreiben des mobilen Geräts bestimmt, also z.B. ob sich der Staubsaugerroboter drehen soll, wenn ja, wie stark und wie schnell und wie weit er fahren soll. In Schritt 188 werden diese Steuerungsanweisungen durch das mobile Gerät umgesetzt.

Wie erwähnt, werden in Schritt 182 Umgebungsinformationen einem SLAM-Algorithmus zugeführt. Dabei kann ein aktueller SLAM-Graph unter Verwendung dieser Umgebungsinformation erweitert werden, d.h. es werden z.B. ein neuer Knoten und eine neue Kante hinzugefügt. Die diesen erweiterten SLAM-Graphen repräsentierende Daten werden wie in Bezug auf Figur 1b mit dem Schritt 150 z.B. einer ausführenden Recheneinheit zugeführt und dort erhalten, und dann mit den Schritten 152, 154 inkl. der Schritte 160, 162, 164 und 170, 172, 174 ausgedünnt. Mit Schritt 156 werden die so aktualisierten Daten wieder dem SLAM-Algorithmus zur nächsten Verwendung zugeführt.

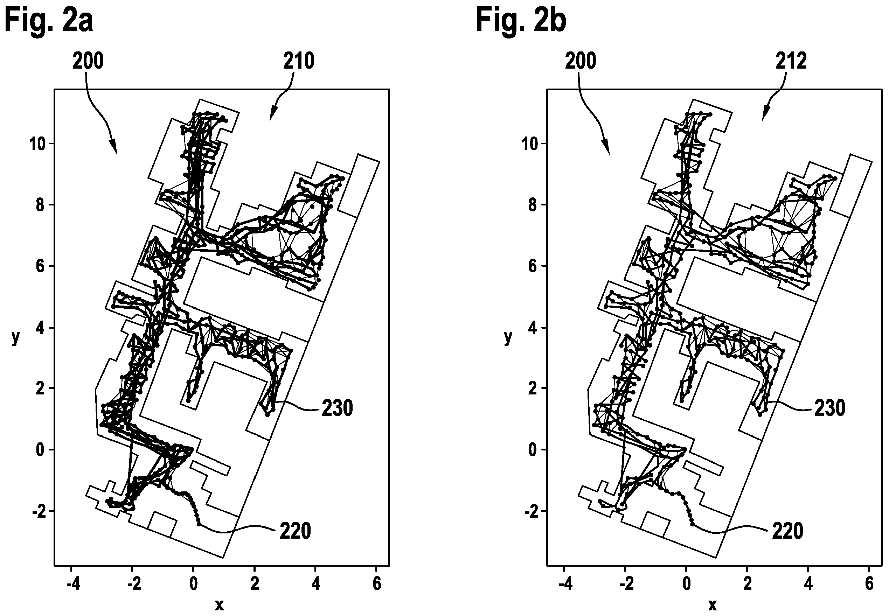

In den Figuren 2a und 2b ist jeweils eine Umgebung 200 (ähnlich wie in Figur 1a) dargestellt, jedoch jeweils mit einem deutlich detaillierten SLAM-Graphen mit Knoten 220 und Kanten 230. In Figur 2a ist ein SLAM-Graph 210 dargestellt, wie er z.B. im Rahmen des Betriebs eines mobilen Geräts ohne Ausdünnung mit der Zeit erhalten wird, d.h. wenn ständig neue Knoten und Kanten hinzukommen, ohne dass welche entfernt werden.

In Figur 2b hingegen ist für dieselbe (realitätsgetreue) Umgebung ein ausgedünnter SLAM-Graph 212 gezeigt, bei dem aus dem SLAM-Graphen 210 Knoten und Kanten gemäß einem erfindungsgemäßen Verfahren in bevorzugter Ausführungsform, wie z.B. vorstehend beschrieben, entfernt wurden. Dabei ist deutlich zusehen, dass die Dichte von Knoten reduziert und die Knoten insbesondere sehr gleichmäßig verteilt sind.

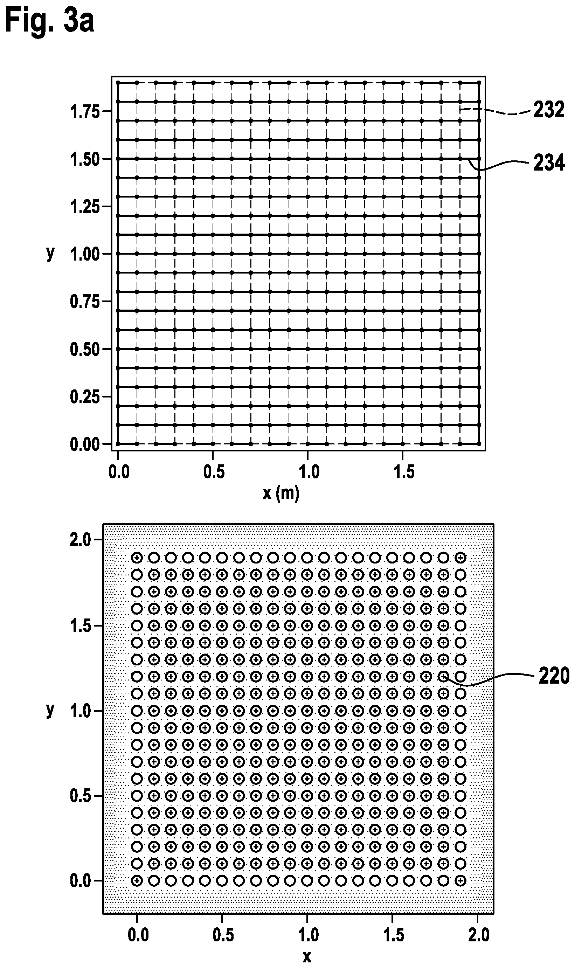

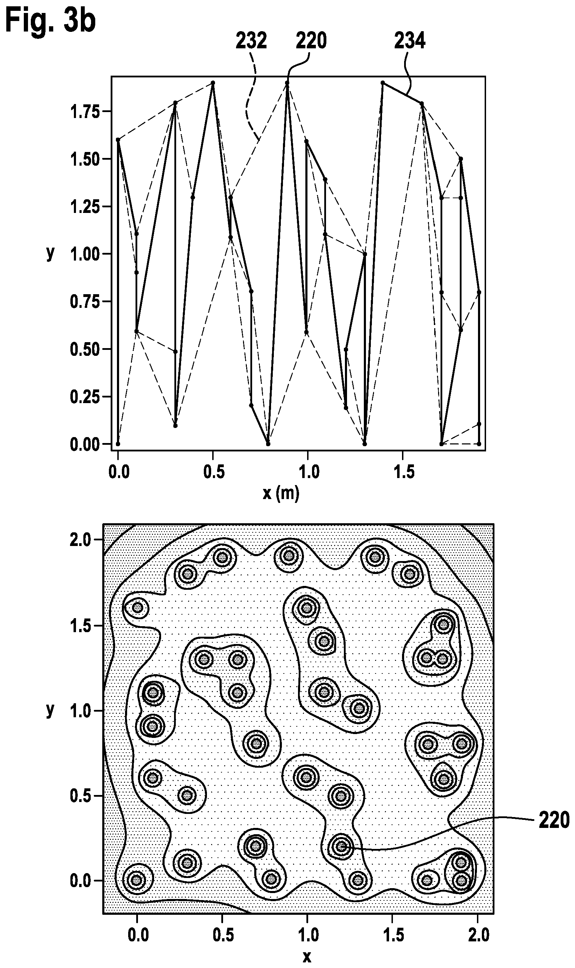

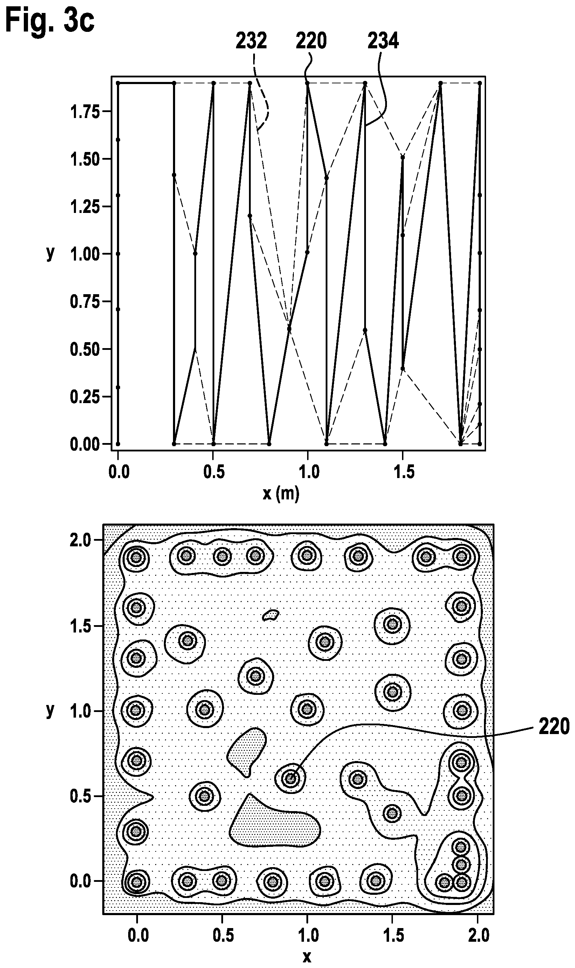

In Figuren 3a bis 3c ist jeweils eine Umgebung mit SLAM-Graph ohne Ausdünnung (Figur 3a), mit nicht erfindungsgemäßer Ausdünnung (Figur 3b) und mit Ausdünnung gemäß einem erfindungsgemäßen Verfahren in bevorzugter Ausführungsform (Figur 3c) gezeigt.

Bei der Umgebung handelt es sich beispielhaft und zur einfacheren Erläuterung, siehe hierzu Figur 3a, um ein Gitter mit regelmäßig angeordneten Knoten (in Form einer Matrix), wobei die Kanten jeweils senkrecht und waagrecht zwei nebeneinanderliegende Knoten verbinden. Vorliegend verlaufen die Bewegungskanten 234 mäanderförmig mit langen vertikalen Geraden. Die zusätzlichen horizontalen Kanten 232 sind Loop-Closure-Kanten.

In der oberen Darstellung sind die Knoten und Kanten gezeigt, in der unteren Darstellung hingegen sind nur die Knoten mit angedeuteter Dichte zu sehen. Diese ist zunächst relativ gleichmäßig aber auch sehr hoch (außer an den Rändern).

In Figur 3b sind nun Knoten 220 und Kanten 232, 234 zu sehen, wenn die zu entfernenden Knoten beispielsweise basierend auf einer einfachen Dichte (mit festem Radius) bestimmt werden. Dabei ist zu sehen, dass die nach dem Entfernen verbleibenden Knoten relativ ungleich verteilt sind.

In Figur 3c sind nun Knoten 220 und Kanten 232, 234 zu sehen, wenn die zu entfernenden Knoten basierend auf der im Rahmen der vorliegenden Erfindung vorgeschlagenen skaleninvarianten Dichte bestimmt werden. Dabei ist zu sehen, dass die nach dem Entfernen verbleibenden Knoten deutlich gleichmäßiger verteilt sind, als dies z.B. bei Figur 3b der Fall ist. Dies zeigt, dass die Verwendung der skaleninvarianten Dichte einen deutlich genaueren SLAM-Graphen liefert.

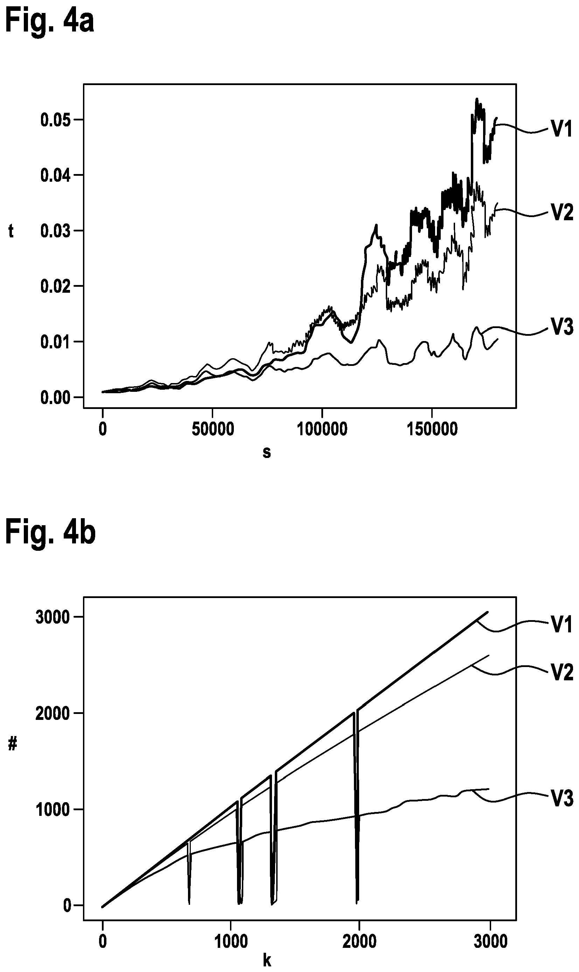

In den Figuren 4a und 4b sind Zeitdauern t von Scans über der Nummer s des Scans und Anzahl # an Knoten über der Nummer k eines Aufzeichnungsvorgangs eines Scans bei einer bestimmten Umgebung gezeigt. Scans werden typischerweise mit einer bestimmten Frequenz, z.B. 10 Hz, vorgenommen. Jeder dieser Scans ist in Figur 4a enthalten. Ein Scan umfasst dabei das Erfassen von Umgebungsinformationen z.B. mittels Lidar-Sensors, die gezeigte Zeitdauer ebenfalls dessen Verarbeitung inkl. Eintragen von Knoten und Optimieren des SLAM-Graphen.

Allerdings werden in der Regel nicht alle diese Scans auch verwendet, um einen Knoten oder eine Information in den SLAM-Graphen einzutragen; dies erfolgt z.B. nur in gewissen zeitlichen oder örtlichen Abständen. Dadurch ist die Anzahl der Nummern k in Figur 4b geringer als die Anzahl der Nummern s in Figur 4a. Bei der Anzahl # an Knoten über der Nummer k eines Aufzeichnungsvorgangs ist bereits umfasst, dass auch wieder Knoten entfernt werden (dies kann z.B. zwischen zwei Aufzeichnungsvorgängen erfolgt sein). Dies ist bei Anwendung eines erfindungsgemäßen Verfahrens in bevorzugten Ausführungsformen (V2, V3) zum Betreiben eines Geräts inkl. Ausdünnen des SLAM-Graphen im Vergleich zu einer Referenz (V1) gezeigt.

Die Linien V1 zeigen dabei jeweils die Referenz, bei der keine Ausdünnung vorgenommen wird, die Linien V2 zeigen die Anwendung eines erfindungsgemäßen Verfahrens in bevorzugter Ausführungsform, bei der relativ wenig bzw. sparsam Knoten und Kanten entfernt werden, und die Linien V3 zeigen die Anwendung eines erfindungsgemäßen Verfahrens in bevorzugter Ausführungsform, bei der relativ viele bzw. aggressiv Knoten und Kanten entfernt werden.

Dabei ist in Fig. 4a zu sehen, dass die Zeit, die für einen Scan nötig ist, bei der Referenz zunehmend ansteigt, während bei Anwendung der Erfindung der Anstieg deutlich geringer ist, insbesondere bei Entfernung vieler Knoten und Kanten.

Die Anzahl an Knoten in Fig. 4b nimmt bei der Referenz linear zu, bei Anwendung der Erfindung hingegen deutlich weniger, insbesondere bei Entfernen vieler Knoten und Kanten, und geht insbesondere auch langsam in Sättigung.

Anzumerken ist, dass die Unregelmäßigkeiten in den Linien (Nullpunkte) durch eine Relokalisierung nach einem neuen Kartendurchlauf entstanden sind und daher in der Praxis keinen Einfluss haben.

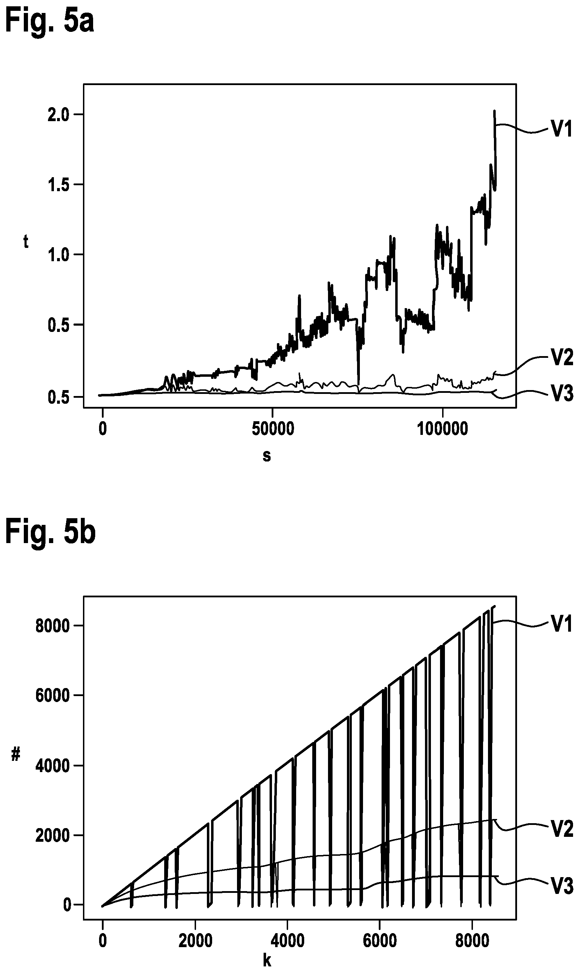

In den Figuren 5a und 5b ist der gleiche Vergleich für eine andere, und zwar größere Umgebung gezeigt; dort ist der Einfluss der Erfindung noch deutlich stärker sichtbar.

**Patentansprüche**

1. Computerimplementiertes Verfahren zum Ausdünnen eines SLAM-Graphen (210), der zum Betreiben eines mobilen Geräts (110) verwendet wird und der eine Vielzahl an Knoten (220) und eine Vielzahl an Kanten (230, 232, 234), die jeweils mit einem Endpunkt an einem Knoten (220) enden, aufweist, **dadurch gekennzeichnet, dass** der SLAM-Graph (210) als Datensatz erhalten (150), Knoten (220) aus dem SLAM-Graphen (210) entfernt (152) und dann ein aktualisierter SLAM-Graphen (212) als Datensatz ausgegeben (156) werden, wobei das Entfernen (152) eines Knotens (220) jeweils umfasst:

   - Bestimmen (160) desjenigen der Vielzahl an Knoten (220), dessen skaleninvariante Dichte an weiteren Knoten (220) um diesen Knoten (220) am höchsten ist, wobei die skaleninvariante Dichte für einen Knoten (220) ein Maß für über verschiedene Bereiche bestimmte einfache Dichten ist, wobei eine einfache Dichte jeweils eine Dichte an weiteren Knoten (220) innerhalb eines bestimmten Bereichs um diesen Knoten (220) angibt, und
   - Entfernen (162) des bestimmten Knotens (220), dessen Dichte am höchsten ist, aus dem SLAM-Graphen (210).

2. Verfahren nach Anspruch 1, wobei das Entfernen (162) des bestimmten Knotens (220), dessen Dichte am höchsten ist, aus dem SLAM-Graphen (210) zusätzlich umfasst: Verknüpfen (164) eines dann unverbundenen Endpunkts einer Kante (232, 232, 234), die an dem entfernten Knoten (220) endete, mit einem anderen Knoten (220).

3. Verfahren nach Anspruch 2, wobei derjenige der dem entfernten Knoten benachbarten Knoten, mit dem der unverbundene Endpunkt verknüpft wird, dadurch ausgewählt wird, dass der Endpunkt entlang einer Bewegungskette aus Bewegungskanten (234) vor- oder zurückbewegt wird, bis ein anderer Knoten erreicht wird; wobei insbesondere derjenige Knoten ausgewählt wird, bei dem eine Länge der neu entstehenden Kante am geringsten ist.

4. Verfahren nach Anspruch 2 oder 3, wobei, wenn beim Verknüpfen (164) des Endpunkts einer Kante mit einem anderen Knoten (220) zwei Kanten kombiniert werden, eine Loop-Closure-Kante (232) entfernt wird, wenn sie einer Bewegungs-Kante (234) widerspricht, und/oder, wenn beide Kanten Loop-Closure-Kanten sind, beide entfernt werden, wenn sie sich widersprechen.

5. Verfahren nach einem der vorstehenden Ansprüche, wobei die skaleninvariante Dichte für einen Knoten (220) ein Maß für über verschiedene Radien bestimmte einfache Dichten ist, wobei eine einfache Dichte jeweils eine Dichte an weiteren Knoten (220) innerhalb eines bestimmten Radius um diesen Knoten (220) angibt.

6. Verfahren nach einem der vorstehenden Ansprüche, wobei so viele Knoten (220) aus dem SLAM-Graphen (210) entfernt werden, bis die skaleninvariante Dichte bei allen Knoten (220) unterhalb eines Dichteschwellwerts liegt, und/oder bis eine Anzahl an Knoten (220) im SLAM-Graphen (210) unterhalb eines Knotenschwellwerts liegt, wobei der Knotenschwellwert insbesondere in Abhängigkeit von einer geometrischen Größe einer durch den SLAM-Graphen (210) repräsentierten Umgebung vorgegeben wird.

7. Verfahren nach einem der vorstehenden Ansprüche, wobei eine vorbestimmte Anzahl an zuletzt zum SLAM-Graphen (210) hinzugefügten Knoten (220) beim Entfernen (152) von Knoten nicht berücksichtigt wird

8. Verfahren nach einem der vorstehenden Ansprüche, wobei weiterhin, unabhängig von einem Entfernen eines Knotens, Kanten (230, 232) aus dem SLAM-Graphen (210) entfernt werden, wobei das Entfernen einer Kante jeweils umfasst:

   - Bestimmen (170) desjenigen der Vielzahl an Knoten (220), an dem die meisten Kanten (230, 232, 234) enden,
   - Bestimmen (172), aus den Kanten, die an dem bestimmten Knoten enden, derjenigen Kante, die die größte Kovarianz oder die geringste Information aufweist, und
   - Entfernen (174) der bestimmten Kante

9. Verfahren nach Anspruch 8, wobei eine Kante nur dann entfernt wird, wenn es sich um eine Loop-Closure-Kante (232) handelt.

10. Verfahren nach Anspruch 8 oder 9, wobei eine Kante nur dann entfernt wird, wenn ein Faktor, der ein Verhältnis einer Länge eines kürzesten, die Kante nicht enthaltenden, Pfades zwischen den zwei Knoten, an denen die Kante endet, und einer Länge der Kante angibt, unterhalb eines Faktorschwellwerts liegt.

11. Verfahren nach einem der Ansprüche 8 bis 10, wobei so viele Kanten (230, 232) aus dem SLAM-Graphen (210), unabhängig von einem Entfernen eines Knotens, entfernt werden, bis eine Anzahl an Kanten, die an demselben Knoten enden, bei allen Knoten (220) unterhalb eines Kantenschwellwerts liegt.

12. Verfahren zum Betreiben eines mobilen Geräts (100), insbesondere eines Roboters, umfassend:

- Erhalten (180) von Umgebungsinformation, die insbesondere mittels eines oder mehrerer Sensoren erfasst werden,
- Bestimmen (184) einer aktuellen Position und/oder Orientierung des mobilen Geräts (100) basierend auf einem aktuellen SLAM-Graphen (210) und den Umgebungsinformationen,
- Bestimmen (186) von Steuerungsanweisungen zum Betreiben des mobilen Geräts basierend auf der aktuellen Position und/oder Orientierung, und
- Umsetzen (188) der Steuerungsanweisungen durch das mobile Gerät (100),
wobei als aktueller SLAM-Graph (210) ein früherer SLAM-Graph, der gemäß einem Verfahren nach einem der vorstehenden Ansprüche ausgedünnt worden ist verwendet wird, und/oder
wobei der aktuelle SLAM-Graph (210) unter Verwendung der Umgebungsinformation erweitert und dann gemäß einem Verfahren nach einem der vorstehenden Ansprüche ausgedünnt wird zur späteren Verwendung als aktueller SLAM-Graph (212).

13. Verfahren nach 12, wobei als mobiles Gerät (100) ein Roboter, insbesondere ein Haushaltsroboter, wie z.B. ein Saug- und/oder Wischroboter, ein Boden- oder Straßenreinigungsgerät oder ein Rasenmähroboter, ein zumindest teilweise automatisiertes Fahrzeug, oder eine Drohne verwendet wird.

14. Verfahren nach 12 oder 13, wobei die Umgebungsinformationen mittels eines oder mehreren Sensoren erfasst werden, die ausgewählt sind aus: Videokameras, Radar-Sensoren, Lidar-Sensoren (180), Laser-Entfernungsmesser, Ultraschallsensoren, Inertialsensoren und Odometern.

15. Recheneinheit (110), die dazu eingerichtet ist, alle Verfahrensschritte eines Verfahrens nach einem der vorstehenden Ansprüche durchzuführen.

16. Mobiles Gerät (100) mit wenigstens einem Sensor (180) zum Erfassen von Umgebungsinformationen und einer Recheneinheit (110) nach Anspruch 15.

17. Mobiles Gerät (100) nach Anspruch 16, das als Roboter, insbesondere als Haushaltsroboter, z.B. Saug- und/oder Wischroboter, Boden- oder Straßenreinigungsgerät oder Rasenmähroboter, als ein zumindest teilweise automatisiertes Fahrzeug, oder als eine Drohne ausgebildet ist.

18. Computerprogramm, das eine Recheneinheit (110) dazu veranlasst, alle Verfahrensschritte eines Verfahrens nach einem der Ansprüche 1 bis 14 durchzuführen, wenn es auf der Recheneinheit (110) ausgeführt wird.

19. Maschinenlesbares Speichermedium mit einem darauf gespeicherten Computerprogramm nach Anspruch 18.

**Claims**

1. Computer-implemented method for thinning a SLAM graph (210) used to operate a mobile device (110) and having a multiplicity of nodes (220) and a multiplicity of edges (230, 232, 234), each of which ends with an end at a node (220), **characterized in that** the SLAM graph (210) is obtained (150) as a data set, nodes (220) are removed (152) from the SLAM graph (210) and then an updated SLAM graph (212) is output (156) as a data set, wherein the removal (152) of a node (220) comprises, in each case:

- determining (160) the one of the multiplicity of nodes (220) whose scale-invariant density is highest at further nodes (220) around this node (220), wherein the scale-invariant density for a node (220) is a measure of simple densities determined over different ranges, wherein a simple density, in each case, indicates a density at further nodes (220) within a specific range around this node (220), and
- removing (162) the determined node (220) whose density is highest from the SLAM graph (210).

2. Method according to Claim 1, wherein the removal (162) of the determined node (220) whose density is highest from the SLAM graph (210) additionally comprises: linking (164) a then unconnected end of an edge (232, 232, 234) that ended at the removed node (220) to another node (220).

3. Method according to Claim 2, wherein the one of the nodes adjacent to the removed node to which the unconnected end is linked is selected by moving the end forwards or backwards along a chain of motion of movement edges (234) until another node is reached; wherein, in particular, the node at which a length of the newly arising edge is shortest is selected.

**4.** Method according to Claim 2 or 3, wherein when linking (164) the end of one edge to another node (220) results in two edges being combined, a loop closure edge (232) is removed if it is inconsistent with a movement edge (234), and/or if both edges are loop closure edges then both are removed if they are inconsistent with one another.

**5.** Method according to one of the preceding claims, wherein the scale-invariant density for a node (220) is a measure of simple densities determined over different radii, wherein a simple density, in each case, indicates a density at further nodes (220) within a specific radius around this node (220).

**6.** Method according to one of the preceding claims, wherein nodes (220) are removed from the SLAM graph (210) until the scale-invariant density at all nodes (220) is below a density threshold value, and/or until a number of nodes (220) in the SLAM graph (210) is below a node threshold value, wherein the node threshold value is predefined in particular according to a geometric size of surroundings represented by the SLAM graph (210).

**7.** Method according to one of the preceding claims, wherein a predetermined number of nodes (220) last added to the SLAM graph (210) is not taken into account when removing (152) nodes.

**8.** Method according to one of the preceding claims, wherein furthermore, independently of a removal of a node, edges (230, 232) are removed from the SLAM graph (210), wherein the removal of an edge, in each case, comprises:

- determining (170) the one of the multiplicity of nodes (220) at which most edges (230, 232, 234) end,
- determining (172), from the edges ending at the determined node, that edge having the greatest covariance or the least information, and
- removing (174) the determined edge.

**9.** Method according to Claim 8, wherein an edge is removed only if it is a loop closure edge (232).

**10.** Method according to Claim 8 or 9, wherein an edge is removed only if a factor indicating a ratio of a length of a shortest path not containing the edge between the two nodes at which the edge ends to a length of the edge is below a factor threshold.

**11.** Method according to one of Claims 8 to 10, wherein edges (230, 232) are removed from the SLAM graph (210), independently of a removal of a node, until a number of edges ending at the same node is below an edge threshold for all nodes (220).

**12.** Method for operating a mobile device (100), in particular a robot, comprising:

- obtaining (180) surroundings information captured in particular by means of one or more sensors,
- determining (184) a current position and/or orientation of the mobile device (100) on the basis of a current SLAM graph (210) and the surroundings information,
- determining (186) control instructions for operating the mobile device on the basis of the current position and/or orientation, and
- implementing (188) the control instructions by way of the mobile device (100),

wherein an earlier SLAM graph, which has been thinned using a method according to one of the preceding claims, is used as the current SLAM graph (210), and/or wherein the current SLAM graph (210) is expanded using the surroundings information and then thinned using a method according to one of the preceding claims for later use as the current SLAM graph (212).

**13.** Method according to Claim 12, wherein the mobile device (100) used is a robot, in particular a domestic robot, e.g. a suction and/or wiper robot, a floor or road cleaning device or a lawnmower robot, an at least partially automated vehicle, or a drone.

**14.** Method according to Claim 12 or 13, wherein the surroundings information is captured by means of one or more sensors selected from: video cameras, radar sensors, lidar sensors (180), laser rangefinders, ultrasonic sensors, inertial sensors and odometers.

**15.** Computing unit (110) which is designed to carry out all of the method steps of a method according to one of the preceding claims.

**16.** Mobile device (100) comprising at least one sensor (180) for capturing surroundings information and a computing unit (110) according to Claim 15.

**17.** Mobile device (100) according to Claim 16, which is in the form of a robot, in particular a domestic robot, e.g. a suction and/or wiper robot, a floor or road cleaning device or a lawnmower robot, an at least partially automated vehicle, or a drone.

**18.** Computer program which causes a computing unit (110) to carry out all of the method steps of a method according to one of Claims 1 to 14 when it is executed on the computing unit (110).

**19.** Machine-readable storage medium comprising a computer program according to Claim 18 stored on it.

## Revendications

**1.** Procédé mis en œuvre par ordinateur pour affiner un graphe SLAM (210) utilisé pour faire fonctionner un appareil mobile (110) et qui comporte une pluralité de nœuds (220) et une pluralité de bords (230, 232, 234) qui se terminent chacun par un point d'extrémité sur un nœud (220), **caractérisé en ce que** le graphe SLAM (210) est conservé (150) sous forme d'ensemble de données, **en ce que** des nœuds (220) sont supprimés (152) du graphe SLAM (210) et **en ce qu'**un graphe SLAM (212) actualisé est ensuite édité (156) sous forme d'ensemble de données, la suppression (152) d'un nœud (220) comprenant à chaque fois :

- le fait (160) de déterminer, parmi la pluralité de nœuds (220), celui dont la densité invariante à l'échelle est la plus élevée par rapport aux autres nœuds (220) autour de ce nœud (220), la densité invariante à l'échelle d'un nœud (220) étant une mesure des densités simples déterminées sur différentes zones, une densité simple indiquant une densité à d'autres nœuds (220) respectifs dans une zone déterminée autour de ce nœud (220), et
- le fait (162) de retirer du graphe SLAM (210) le nœud déterminé (220) dont la densité est la plus élevée.

**2.** Procédé selon la revendication 1, dans lequel le retrait (162) hors du graphe SLAM (210), du nœud déterminé (220) dont la densité est la plus élevée comprend en outre : le fait (164) de relier à un autre nœud (220) une extrémité alors déconnectée d'un bord (232, 232, 234) qui se terminait au niveau du nœud éloigné (220).

**3.** Procédé selon la revendication 2, dans lequel le nœud voisin du nœud éloigné auquel le point d'extrémité non connecté est relié est sélectionné en déplaçant le point d'extrémité vers l'avant ou vers l'arrière le long d'une chaîne de mouvement constituée de bords de mouvement (234) jusqu'à ce qu'un autre nœud soit atteint ; en particulier, est sélectionné le nœud pour lequel la longueur du bord nouvellement formé, qui en résulte, est la plus courte.

**4.** Procédé selon la revendication 2 ou 3, dans lequel, lorsque deux bords sont combinés lors de la liaison (164) du point d'extrémité d'un bord à un autre nœud (220), un bord de fermeture de boucle (232) est supprimé s'il est en contradiction avec un bord de mouvement (234), et/ou, si les deux bords sont des bords de fermeture de boucle, les deux sont supprimés s'ils se contredisent.

**5.** Procédé selon l'une des revendications précédentes, dans lequel la densité invariante à l'échelle pour un nœud (220) est une mesure de densités simples déterminées sur différents rayons, une densité simple indiquant une densité d'autres nœuds (220) respectifs dans un rayon déterminé autour de ce nœud (220).

**6.** Procédé selon l'une des revendications précédentes, dans lequel autant de nœuds (220) que nécessaire sont supprimés du graphe SLAM (210) jusqu'à ce que la densité invariante à l'échelle soit inférieure à une valeur seuil de densité pour tous les nœuds (220) et/ou jusqu'à ce qu'un nombre de nœuds (220) dans le graphe SLAM (210) soit inférieur à une valeur seuil de nœuds, la valeur seuil de nœuds étant prédéfinie en fonction d'une taille géométrique d'un environnement représenté par le graphe SLAM (210).

**7.** Procédé selon l'une des revendications précédentes, dans lequel un nombre prédéfini de nœuds (220) ajoutés en dernier au graphe SLAM (210) n'est pas pris en compte lors de la suppression (152) de nœuds.

**8.** Procédé selon l'une des revendications précédentes, dans lequel, indépendamment de la suppression d'un nœud, des bords (230, 232) sont également supprimés du graphe SLAM (210), la suppression de chaque bord comprenant :

- le fait (170) de déterminer celui de la pluralité de nœuds (220) auquel se terminent la plupart des bords (230, 232, 234),
- le fait (172) de déterminer, parmi les bords se terminant au niveau du nœud déterminé, le bord qui présente la plus grande covariance ou la plus faible information, et
- le fait (174) de retirer le bord déterminé.

**9.** Procédé selon la revendication 8, dans lequel un bord n'est retiré que s'il s'agit d'un bord (232) de fermeture de boucle.

**10.** Procédé selon la revendication 8 ou 9, dans lequel un bord n'est retiré que si un facteur, qui indique un rapport entre une longueur d'un chemin le plus court, qui ne contient pas le bord entre les deux nœuds auxquels le bord se termine, et une longueur du bord, est inférieur à une valeur seuil du facteur.

**11.** Procédé selon l'une des revendications 8 à 10, dans lequel autant de bords (230, 232) que nécessaire sont supprimés du graphe SLAM (210), indépendamment de la suppression d'un nœud, jusqu'à ce qu'un nombre de bords se terminant au même nœud soit inférieur à une valeur seuil de bord pour tous les nœuds (220).

12. Procédé pour faire fonctionner un appareil mobile (100), en particulier un robot, comprenant :

- le fait (180) d'obtenir des informations sur l'environnement, qui sont détectées en particulier au moyen d'un ou plusieurs capteurs,
- le fait (184) de déterminer une position et/ou une orientation actuelle(s) de l'appareil mobile (100) sur la base d'un graphe SLAM actuel (210) et des informations sur l'environnement,
- le fait (186) de déterminer des instructions de commande pour faire fonctionner l'appareil mobile en fonction de la position et/ou de l'orientation actuelle(s), et
- le fait (188), par l'appareil mobile (100), de mettre en œuvre les instructions de commande, un graphe SLAM antérieur, qui a été affiné selon un procédé selon l'une des revendications précédentes, étant utilisé en tant que graphe SLAM actuel (210), et/ou

le graphe SLAM actuel (210) étant étendu en utilisant les informations sur l'environnement, puis affiné selon un procédé selon l'une des revendications précédentes pour une utilisation ultérieure en tant que graphe SLAM actuel (212).

13. Procédé selon la revendication 12, dans lequel on utilise en tant qu'appareil mobile (100) un robot, en particulier un robot ménager, tel qu'un robot aspirateur et/ou laveur, un appareil de nettoyage des sols ou des rues ou un robot tondeur de gazon, un véhicule au moins partiellement automatisé ou un drone.

14. Procédé selon la revendication 12 ou 13, dans lequel les informations sur l'environnement sont détectées au moyen d'un ou plusieurs capteurs choisis parmi : des caméras vidéo, des capteurs radar, des capteurs lidar (180), des télémètres laser, des capteurs à ultrasons, des capteurs inertiels et des odomètres.

15. Unité de calcul (110) qui est conçue pour mettre en œuvre toutes les étapes d'un procédé selon l'une des revendications précédentes.

16. Appareil mobile (100) comprenant au moins un capteur (180) pour détecter des informations sur l'environnement et une unité de calcul (110) selon la revendication 15.

17. Appareil mobile (100) selon la revendication 16, qui est conçu sous la forme d'un robot, en particulier un robot ménager, par exemple un robot aspirateur et/ou laveur, un appareil de nettoyage des sols ou des rues ou un robot tondeur de gazon, d'un véhicule au moins partiellement automatisé ou d'un drone.

18. Programme informatique qui amène une unité de calcul (110) à mettre en œuvre toutes les étapes d'un procédé selon l'une des revendications 1 à 14, lorsqu'il est exécuté sur l'unité de calcul (110).

19. Support de stockage lisible par machine sur lequel est enregistré un programme informatique selon la revendication 18.

**Fig. 1a**

EP 4 370 990 B1

# Fig. 1b

# Fig. 1c

**Fig. 2a**

**Fig. 2b**

EP 4 370 990 B1

# Fig. 3a

# Fig. 3b

# Fig. 3c

# Fig. 4a

# Fig. 4b

## Fig. 5a

## Fig. 5b

EP 4 370 990 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Monocular graph SLAM with complexity reduction. **EADE E et al.** INTELLIGENT ROBOTS AND SYSTEMS (IROS), 2010 IEEE/RSJ INTERNATIONAL CONFERENCE ON. IEEE, 18 October 2010, 3017-3024

- **LANG DAGMAR et al.** *Semantic 3D Octree Maps based on Conditional Random Fields*, 23 May 2013, http://www.mva-org.jp/Proceedings/2013USB/papers/08-03.pdf, (20210401)
- **E. EADE** ; **P. FONG** ; **M. E. MUNICH**. Monocular graph SLAM with complexity reduction. *Proc. IEEE/RSJ Int. Conf. Intelligent Robots and Systems*, 2010, 3017-3024